# EUROPEAN PATENT APPLICATION

(11) **EP 0 617 276 A1**
(43) Date of publication of application: **28.09.1994**
(21) Application number: 94103577.6
(22) Date of filing: 09.03.1994
(51) Int. Cl.: G01N 23/18

(54) **Inspection method and apparatus for pneumatic tyre casings**

(30) Priority: 26.03.1993 US 37788
(71) Applicant: THE GOODYEAR TIRE & RUBBER COMPANY, Akron, Ohio 44316-0001 (US)
(72) Inventor: Daso, Richard Paul, Akron, Ohio 44313 (US)
(74) Representative: Leitz, Paul

(57) **Abstract**

A method and apparatus for inspecting a pneumatic tire casing (100) is described. The inspection method includes the steps of aligning a source (60) and a detector (70) external of the casing (100), the source (60) angularly transmitting a beam across the shoulder region of the tire and angularly impinging a portion of the casing; rotating the casing about its axis of rotation; receiving the beam image of the shoulder region of the casing; and observing any separation or lifting of the breaker edge of the casing relative to the rest of the breaker as displayed onto a screen. The preferred apparatus includes a traversable assembly (50) which is pivotally and linearly movable, an X-ray source (60) and a detector (70) linearly spaced along the beam axis of the source (60) and attached to the assembly (50), and a means for energizing the source.

## Description

### Background of the Invention

This invention relates to an inspection method and apparatus for a pneumatic tire casing. More particularly, the invention describes a method to detect the lifting or separating of a breaker or belt at a lateral edge of the tire casing. An apparatus for carrying out the above method as well as performing inspection procedures for the entire tire structure is also disclosed.

Historically the inspection of internal tire components has included the use of X-ray apparatus.

U.S. Patent No. 3,826,919, assigned to the Westinghouse Electric Company, describes an apparatus capable of emitting an X-ray beam at different angles between the beads into the tire annulus toward an exterior X-ray imaging means automatically maintained aligned with such beam. The claimed apparatus purported to enable complete bead-to-bead inspection of the tire without requiring a removal and sidewall reversal on the apparatus. The apparatus rotates the tire and can spread the beads to facilitate inspection of the tire structure.

U.S. Patent No. 3,903,416 also describes a method and apparatus for inspecting tires which employ an X-ray source emitting X-rays from the interior of the tire through the tire structure onto a panoramic radiation detection unit. The claimed advantage of the apparatus was the avoidance of excessive manipulation to X-ray the tire, the tire being rotated about its axis to facilitate complete inspection.

Another interesting apparatus was invented by Horst Steffel and it is described in U.S. Patent No. 3,809,900. The apparatus for the continuous overall X-ray examination of a motor vehicle tire which is rotatably supported in an expanded state and comprises an X-ray apparatus for irradiating the tire from its interior. The invention provided one lateral X-ray tube adjacent each side of the tire to irradiate the sidewall of the tire. Preferably, a third X-ray tube was provided to irradiate the tread from the interior of the tire.

In 1989, a U.S. Patent issued to Leonard O. Curry, U.S. Patent No. 4,839,914. This portable X-ray apparatus included an X-ray tube and a fluoroscope which were spaced apart approximately the length of the outer diameter of the tire and were aligned to irradiate an area including at least half the width of the tread and a portion of the sidewall. The Curry apparatus was claimed to be particularly well adapted for inspecting defects in used tires to be used in retreading operations. The principal advantages of the positioning of the X-ray tube external to the tire was convenience in loading and unloading tires and softer X-rays resulting in greater contrast. The position of the X-ray tube and scope was fixed, thus requiring the tire to be flipped to inspect the opposite side. The positioning arrangement described by the Curry apparatus limited the views available to basically one perspective requiring manipulation of the tire to 100% inspect the structure. Furthermore, the views available limited inspection of the bead areas of the tire as well as other areas which effectively blinded the X-ray beam with the tire structure in the path of the beam.

The above prior art apparatus were incapable of providing a clear image of a breaker edge such that a lift or separation of the breaker could be detected. It is believed that such lifting or separation at the belt edge may be the precursor to a potential casing problem.

### Summary of the Invention

A method and apparatus for inspecting a pneumatic tire casing is described. The casing has a breaker ply, an axis of rotation and a mid-circumferential plane perpendicular to the axis and passing through the center of the casing. The method of inspecting a tire casing with a breaker reinforcement includes the steps of: a) external of the casing, aligning a source and a detector, the source angularly transmitting a beam across the shoulder region of the tire and angularly impinging a portion of the detector with a beam; b) rotating the casing about its axis of rotation; c) receiving the beam image of the shoulder region of the casing; and d) observing any separation or lifting of the breaker edge of the casing relative to the rest of the breaker as displayed onto a screen. The inspection method preferably includes the steps of positioning the line between a source and a detector at an angle ϑ with respect to the mid-circumferential plane of the tire casing greater than 45°; and irradiating the tire casing by energizing the source, the energized source emitting a beam along the line, the beam passing through a lateral edge of at least one breaker in the casing. Preferably, the beads are spread and the casing is rotated during the inspection procedure.

The preferred apparatus includes a traversable carriage assembly which is pivotally and linearly movable, an X-ray source and an image detector linearly spaced along the beam axis of the source and attached to the carriage assembly, and a means for energizing the source.

The apparatus further may include a means for axially spreading the annular beads of the casing and a means for rotating the casing during the inspection process.

### Brief Description of the Drawings

Figure 1 illustrates a side view of the apparatus according to the present invention, the apparatus having a tire casing in the ready to inspect position.

Figure 2 illustrates a portion of the apparatus as illustrated in Figure 1. The phantom or dashed lines represent the tire and tire loading mechanism in the receiving position while the arrow indicates the direction of travel while loading the tire casing onto the apparatus.

Figure 3 illustrates a portion of the apparatus as shown in Figure 1 depicting the image source and image detecting units with a tire casing on the apparatus.

Figure 3A illustrates that portion of the apparatus as shown in Figure 3, the figure illustrates the rotation of the casing, the linear movement capability of the image source relative to the image detector as well as the angular up and down movement capability of the image source and detector carriage assembly.

Figure 3B illustrates the linear movement of the source and detector carriage assembly relative to the tire casing.

Figure 4 is a top view of the apparatus taken along lines 4-4 of Figure 3. A portion of the tire casing is removed to facilitate viewing the image source which is aligned to inspect the belt or breaker portion of a casing.

Figure 4A is a top view of the apparatus showing the source and detector carriage pivotally rotated to inspect a bead and sidewall portion of the casing. The phantom or dashed lines illustrate the carriage assembly being rotated to permit the opposite bead and sidewall to be inspected.

Figure 4B is a top view illustrating the source and detector carriage assembly rotated to direct the beam across a shoulder portion of the casing. The phantom line illustrates the carriage assembly being rotated to direct the beam across the opposite shoulder.

Figure 4C is a further top view illustrating an increased angular position capability of the source relative to the detector and the resultant beam path.

Figure 4D is a cross-sectional view of a tire. The view illustrates the resultant beam path emitted from the source through the casing shoulder to the detector.

Figure 5 is a plan view of the apparatus with a tire casing, a portion of the casing being removed to show the image source.

Figure 6 is a plan view showing a cross sectional view of a tire mounted on the apparatus with the bead spreader in a non-spread position.

Figure 6A is a view similar to Figure 6 which illustrated the direction of motion the bead spreader takes in spreading the tire casing beads, the beads being illustrated in the spread position.

Figure 7 illustrates the image detector with a crescent shaped shield, the phantom or dashed lines being the tire casing.

Figure 8 is an exploded view showing the detector and shield.

Figure 9 illustrates the image of the tire casing shoulder as viewed at a video monitor.

Figure 10 illustrates the image of a repaired portion of a belt as would be seen at the vide monitor.

### Definitions

To better understand the content of this application, the following definitions of terms are provided below.

"Axial" and "axially" means lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Belt structure" means at least two annular layers or plies of parallel cords, woven or unwoven, underlying the tread, unanchored to the bead, and having both left and right cord angles in the range from 17 degrees to 27 degrees with respect to the equatorial plane of the tire.

"Breaker" means a layer or ply of parallel cords woven or unwoven, underlying the tread, unanchored to the bead, and having a left or right cord angle in the range from 0° to 90° with respect to the equatorial plane of the tire; thus, a "belt" is a species of "breaker" that has a low cord angle.

"Carcass" means the tire structure apart from the belt structure, tread, undertread, and sidewall rubber over the plies, but including the beads.

"Casing" means the carcass, belt structure, beads, sidewalls, and all other components of the tire including a layer of unvulcanized rubber to facilitate the assembly of the tread, the tread and undertread being excluded. The casing may be new, unvulcanized rubber or previously vulcanized rubber to be fitted with a new tread.

"Cord" means one of the reinforcement strands of which the plies in the tire are comprised.

"Mid-circumferential Plane (CP)" or "Equatorial plane (EP)" means the plane perpendicular to the tire's axis of rotation and passing through the center of its tread.

"Ply" means a continuous layer of rubber-coated parallel cords.

"Radial" and "radially" means directions radially toward or away from the axis of rotation of the tire.

"Radial-ply tire" means a belted or circumferentially-restricted pneumatic tire in which the ply cords which extend from bead to bead are laid at cord angles between 65° and 90° with respect to the equatorial plane of the tire.

"Section height" (SH) means the radial distance from the nominal rim diameter to the outer diameter of the tire at its equatorial plane.

"Section width" (SW) means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Shoulder" means the upper portion of a sidewall just below the tread edge. Affects cornering.

"Sidewall" means that portion of a tire between the tread and the bead.

"Tread" means a molded rubber component which, when bonded to a tire casing, includes that portion of the tire which comes into contact with the road when the tire is normally inflated and under normal load.

### Detailed Description of the Invention

The method of inspecting a tire casing 100 with a breaker 110 or belt reinforcement is described below.

The casing 100 is rolled onto a lift mechanism 30. The operator actuates a lever and the lift mechanism 30 raises the casing 100 to a level where the casing 100 can be rolled onto the apparatus 2. Prior to loading the casing 100 onto the apparatus 2, the operator must insure that the bead spreader mechanism 40 and the source 60 and detecting apparatus 70 are rotated clear of the path of the tire casing 100. Once the tire is positioned onto the apparatus 2, it is centered by a pair of guide wheels 36,37. The tire rests between two drive rollers 34,35 and is oriented in a vertical or upright position on the apparatus. The operator then rotates the bead spreader mechanism 40 into contact with the interior of the tire.

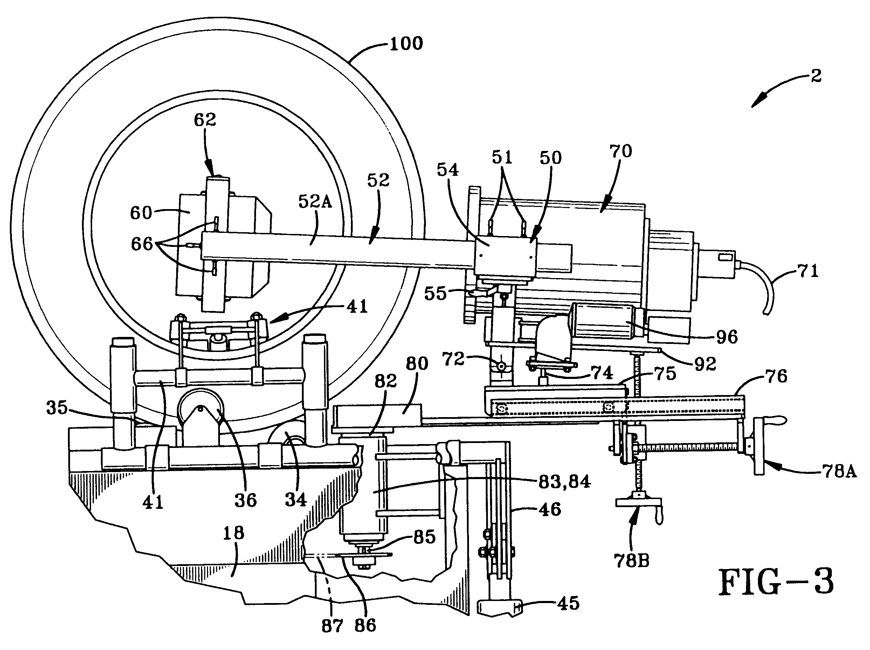

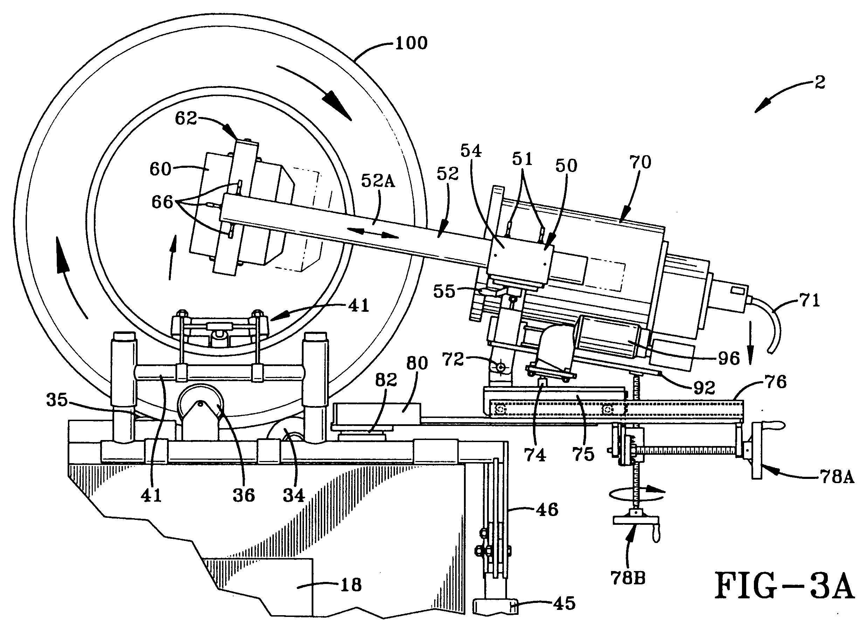

As illustrated in Figures 3 and 3A the traversable carriage assembly 50 is positioned such that the source 60 is moved either linearly inward or outward relative to the casing 100 and the entire carriage 50 can be elevated angularly relative to the casing by means of a hand crank assembly 78B to facilitate up and down vertical movement of the source relative to the tire casing. Having so oriented the traversable carriage assembly 50, the operator can then leave a shielded room where the apparatus is contained and go to a remote control station 10 whereby he can initiate the inspection procedure. At the remote control station 10 the operator will energize the source. In the preferred embodiment, the source is an X-ray tube, the detector is a fluoroscope and the means for energizing the source is the electrical control panel 14. After energizing the X-ray tube and turning on the video monitor 11, the operator will initiate rotation of the tire casing 100 at the control panel 14. The drive rollers 34,35 will rotate the tire as shown in Fig. 3A. Alternatively, the drive roller mechanism 34,35 can be reversed such that the tire casing 100 is rotated in the opposite direction.

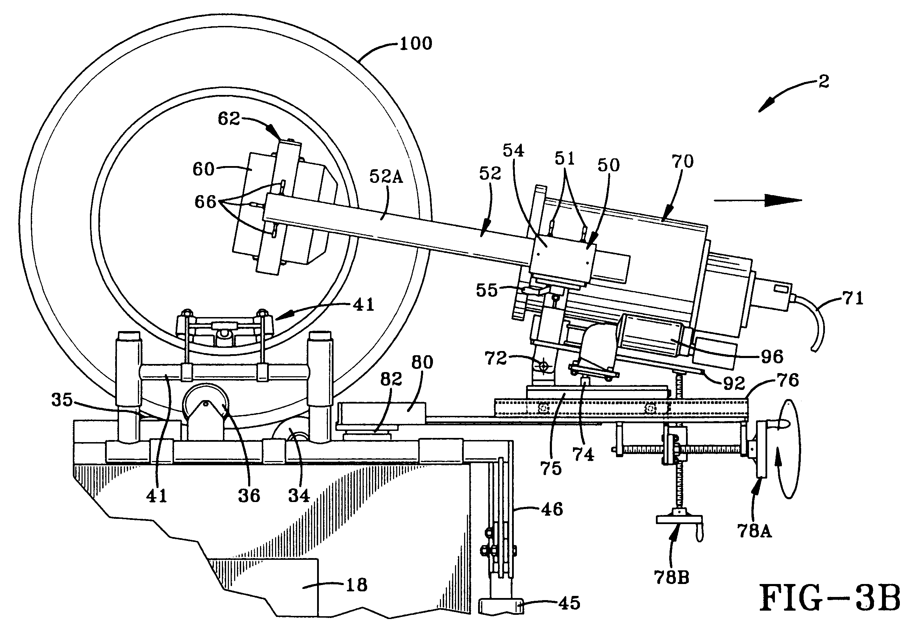

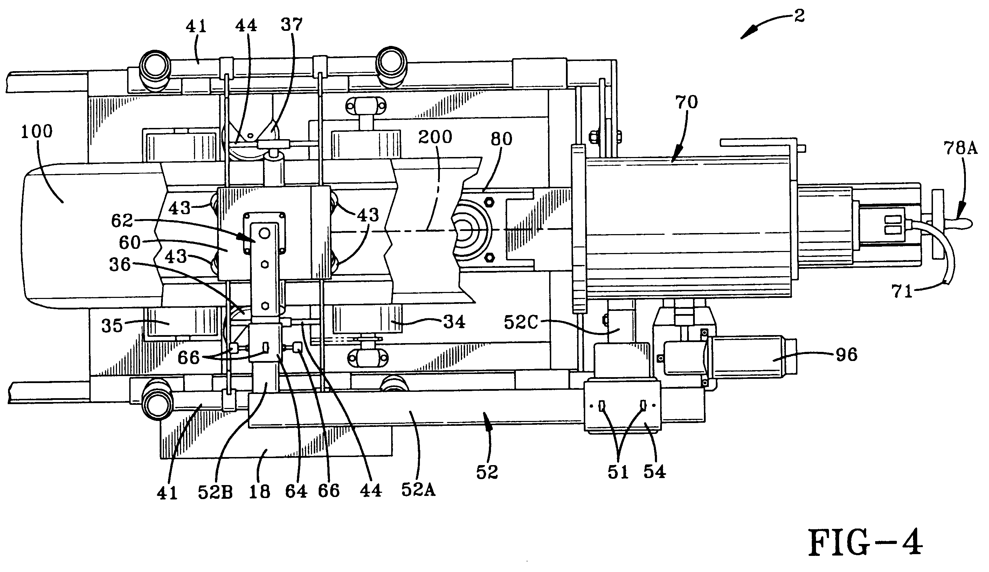

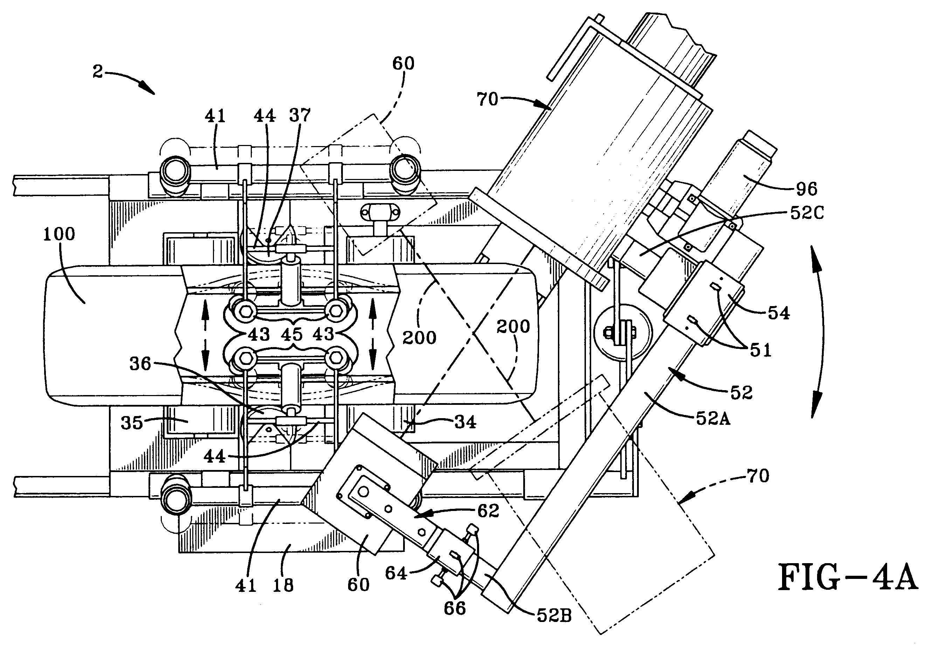

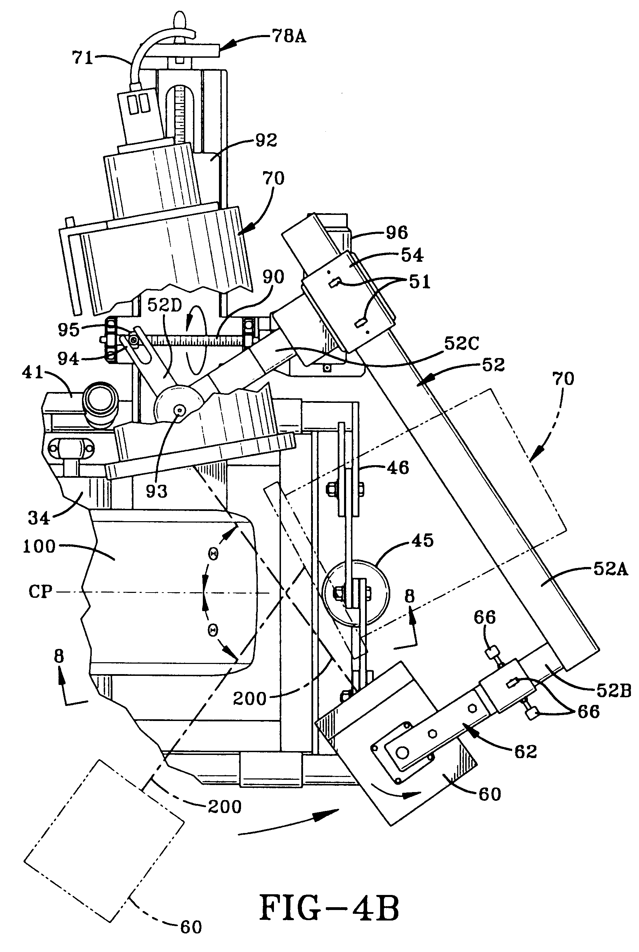

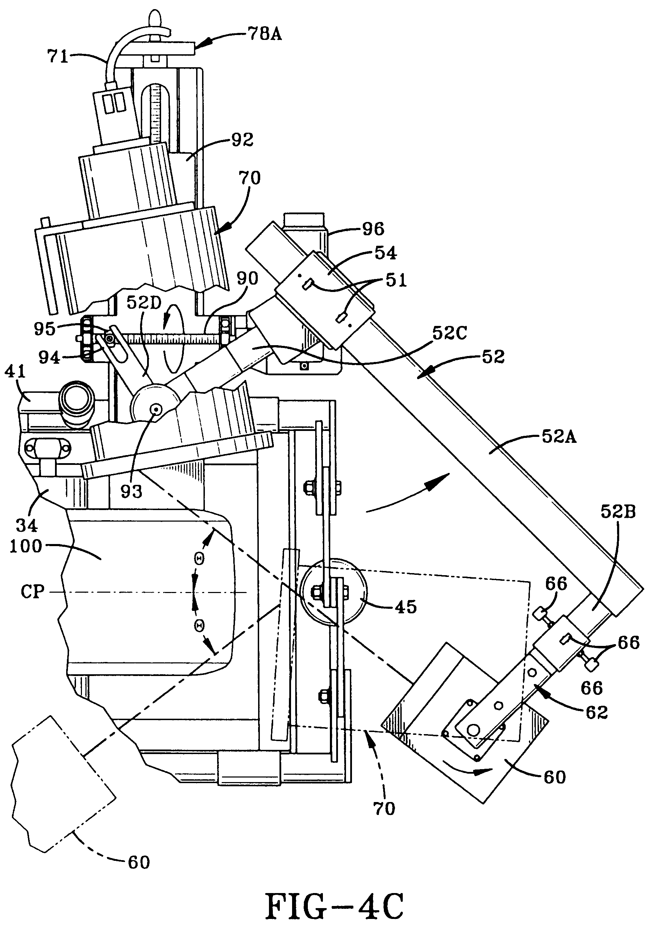

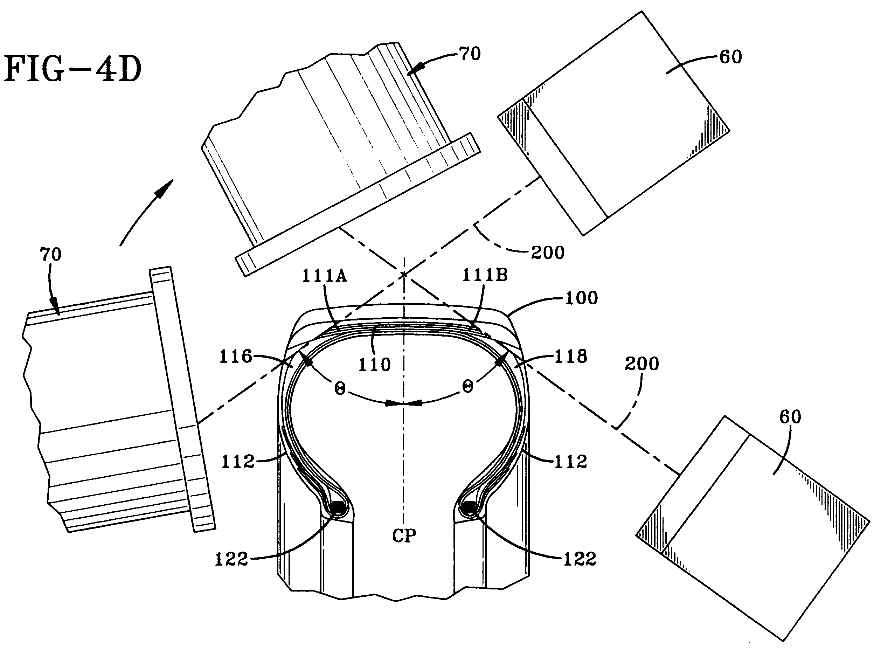

As illustrated in Fig. 4, the operator can rotate the traversable carriage 50 such that the source 60 directs its beam directly onto the breaker 110 or belt area of the tire casing 100. The emitted beam is picked up by the detector 70 and transmitted electronically to the video monitor 11 outside the shielded room. As can be seen in Fig. 4 the source 60 can be located internal of the tire casing 100. As illustrated in Fig. 4A, to inspect the bead 122 and sidewall portions 112,114 of the casing 100, the traversable carriage assembly 50 is rotated so that the beam impinges between the bead 122 and the casing shoulder 116. The operator, by turning a switch at the control panel 14, can rotate the source 60 such that it is external of the tire casing 100 and is emitting the beam through the sidewall area 112 of the casing onto the detector 70. To inspect the opposite sidewall 114, the traversable carriage assembly 50 is rotated through the casing 100 such that the source 60 is exterior of the tire casing 100 and directing its beam to the opposite sidewall 114 through the bead 122 up to the shoulder 118, the beam impinging on the detector 60. It should be remembered that in each of these operations the tire is being completely rotated so that a 100% inspection procedure can be accomplished. The apparatus has a pair of limit switches to prevent the carriage assembly from rotating into the casing 100.

As illustrated in Fig. 10, a portion of the belt or breaker reinforcement 110 is shown wherein a damaged area is depicted at location 120, the damaged area being represented as a void in the belt area. This view is as one would see it on inspecting the tire casing with the apparatus of the present invention.

The above described method of inspecting the tire casing as shown in Figs. 4 and 4A permits an inspection of the bead's 122 sidewalls 112,114, and breaker or belt area 110 of the tire casing 100. As illustrated in Figs. 4B and 4C, the traversable carriage assembly 50 being rotatable around the tire casing 100 permits a unique method of inspecting a breaker or belt reinforcement 110 of the tire casing 100 at a lateral edge.

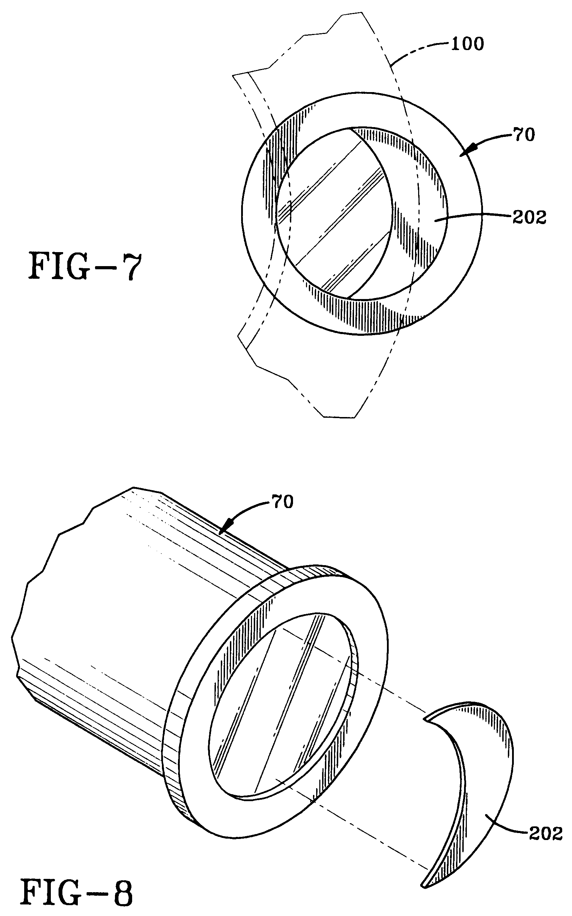

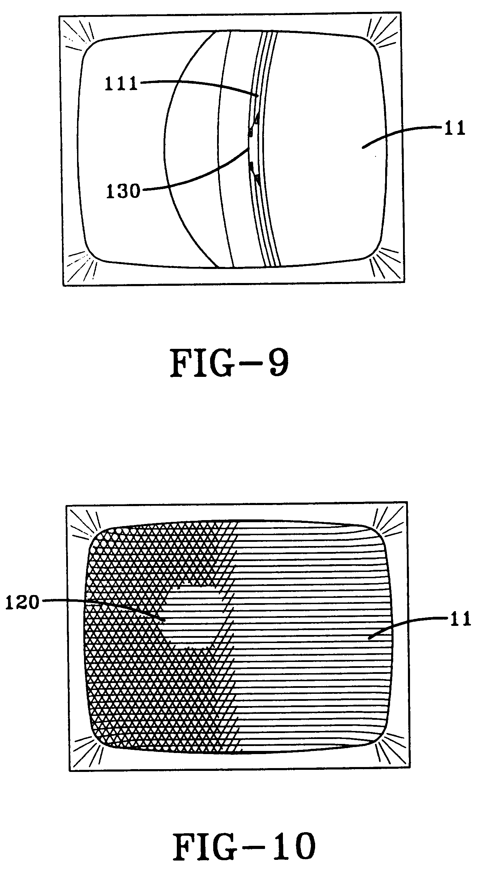

The operator positions the line 200 between the source 60 and the detector 70 at an angle ϑ with the mid-circumferential plane of the tire casing greater than 45°. As can be seen in Figs. 4B and 4C the described angle ϑ is the included acute angle between the line and the mid-circumferential plane (CP). The operator in positioning the line 200 insures that the line 200 intersects a breaker or belt edge 111 of the tire casing 100 as illustrated in Fig. 4D. Having positioned the detector 70 and the source 60 as indicated above, the operator will insert the leaded crescent shield 202 onto the detector 70 as illustrated in Figs. 7 and 8. The shield 202 effectively blocks the transmission of the beam from the source 60 onto the detector 70 in the area that is not eclipsed by the shoulder 116,118 of the tire casing 100. The operator having positioned the source and the shielded detector as shown in Figs. 4B and 4C then leaves the shielded room and goes to the control panel. At the control panel, the operator initiates rotation of the tire casing 100 and energizes the source 60. The source irradiates the tire casing 100 with a beam along the line 200 between the source 60 and the detector 70. The beam passes through a lateral edge 111 of at least one breaker 110 in the casing 100. As the tire casing 100 rotates the inspector views the monitor and looks for any elevation or discontinuity that is displayed upon the screen 11. As illustrated in Fig. 9, a bright spot 130 is an indication of a breaker edge which has lifted or separated. As shown in Fig. 9, the bright spot 130 is depicted by the absence of the lines at the lateral edge 111. By tagging the tire at the start of the inspection the operator is able to identify the exact angular location of the failure. The operator can video record the failure, establish the angular orientation and at the end of the inspection procedure mark the tire casing at the precise location of the tire failure. After inspecting one lateral edge 111A of the tire casing, the operator from his remote control station 10 can rotate the traversable carriage assembly 50 such that the detector 70 and source 60 are reoriented as illustrated in Figs. 4B and 4C. As illustrated, to inspect the opposite lateral edges, the source is along the sidewall of the tire while the detector is oriented in the crown region or tread region of the tire casing 100. By positioning the line 200 between the source 60 and the detector 70 to about the same angular configuration as was previously done on the opposite side, a similar inspection of the belt edge 111B can occur. The operator will initiate rotation of the tire casing 100 and will irradiate the tire casing by energizing the source with the beam along the line 200 between the source 60 and the detector 70. The beam passing through the opposite lateral edge 111B of the tire casing 100. After a complete rotation of the tire casing 100, a total inspection of both belt edges 111A,111B will have occurred. It is believed that any lifting or separation of the belt edge may be a precursor to an impending problem with the tire casing 100. In each of the above described methods of inspection it is important to note (as shown in Figs. 4A and 4B) that the bead spreader 40 had been actuated prior to the rotation of the tire casing. It is believed by spreading the beads 122 as illustrated in Figs. 4A and 4B that an improved inspection procedure can be achieved whereby any potential lift or separation of any of the reinforcement structure will be visually enhanced by the spacing apart of the beads and the resultant forces that are imparted onto the casing 100 by such spreading of the beads 122.

As further illustrated in Fig. 4C to increase the angular orientation of the line 200 relative to the circumferential plane CP, the source 60 can be pivoted about the arm 52B in either direction thereby either increasing or decreasing the angle to insure that the beam is directed precisely over a lateral edge 111A,111B of a breaker or belt reinforcement 110. Additionally, the support arm 52A can be pivoted relative to the detector further increasing the relative angular position of the source 60 and detector 70. As described above the apparatus 2 for inspecting a tire casing permits the casing to be inspected at each structural component as well as enabling the inspector to look for any potential weaknesses in the belt or breaker edge area of the casing.

Having completed the inspection procedure of the tire casing 100, the operator will de-energize the irradiating source 60, stop the rotation of the tire, move the bead spreaders 40 to a relaxed position, and enter the shielded room. On entering the room the operator will rotate the carriage assembly 50 so that it will be clear of the tire, and rotate the bead spreaders 40 outward of the tire path. The operator will mark the tire in any location where a defect has occurred. The operator will then elevate the lift mechanism roll the tire onto the mechanism which will in turn result in the mechanism lowering the tire to the floor whereby the operator can remove the inspected casing from the apparatus.

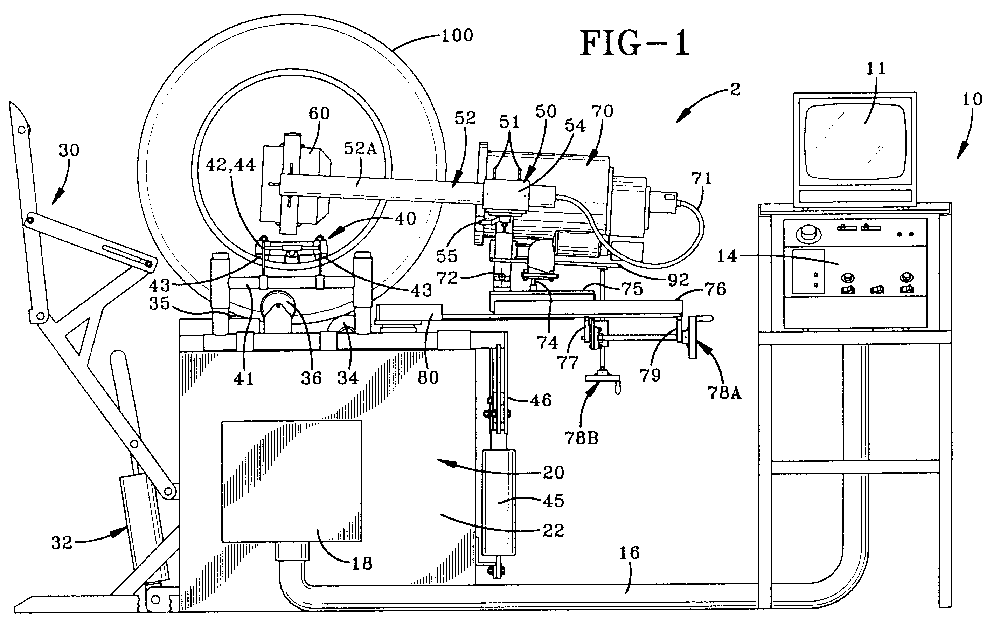

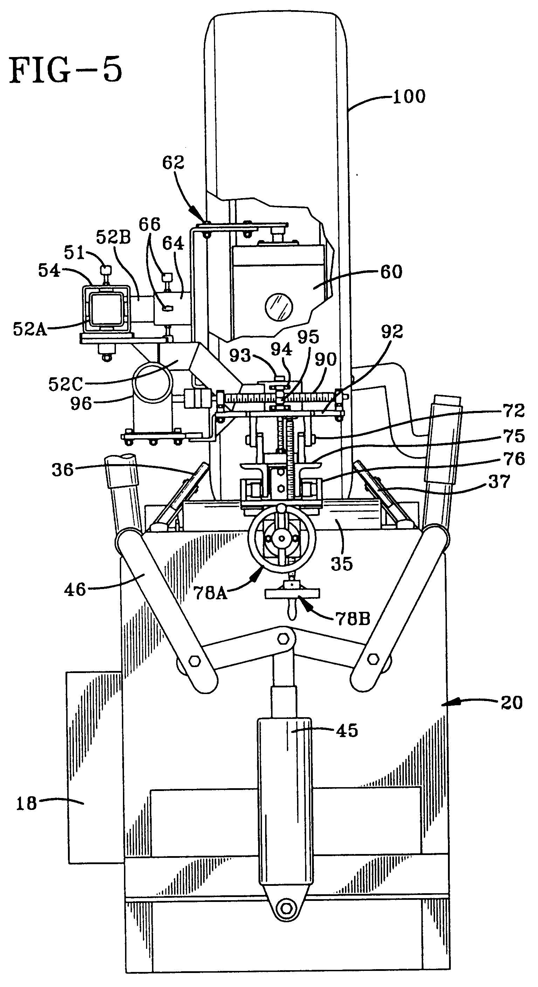

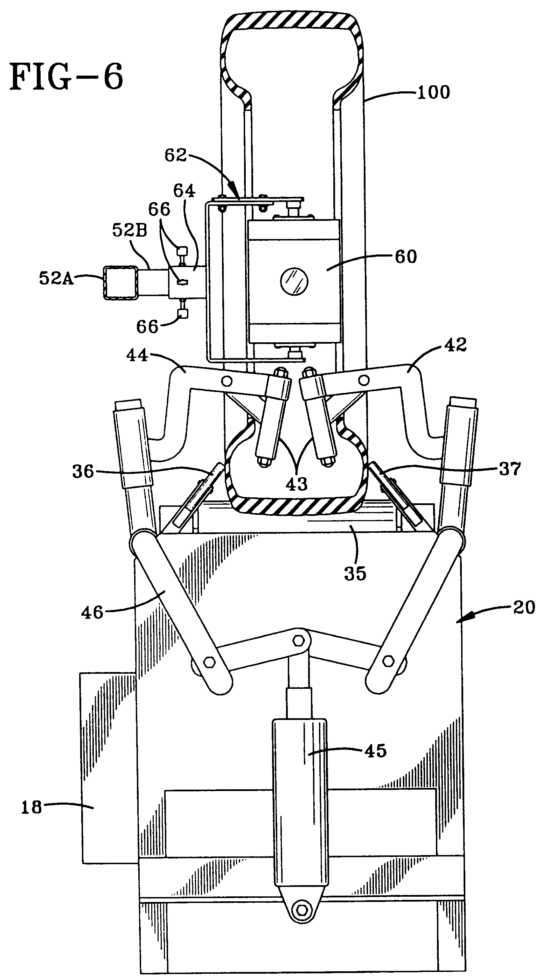

An apparatus 2 for inspecting tire casings 100 according to the preferred embodiment of the invention is shown in Figures 1 through 6B. As shown in Figure 1, the apparatus 2 includes a remote control station 10. The control station 10 includes a video monitor 11 which displays the internal structure of the tire casing 100. The remote control station 10 further includes a control panel 14. At the control panel 14 the inspector can energize the apparatus 2, control and direct the movements of the apparatus 2 which enables the entire casing 100 to be inspected. Preferably the remote control station 10 is located exterior of the apparatus 2, the apparatus 2 being located in a leaded or shielded room. The control panel 14 is connected to the apparatus electrically via the conduit 16. The electrical conduit 16 is connected to the apparatus 2 as shown in Fig. 1 at an electrical panel 18 on the side panel 22 of the apparatus 2.

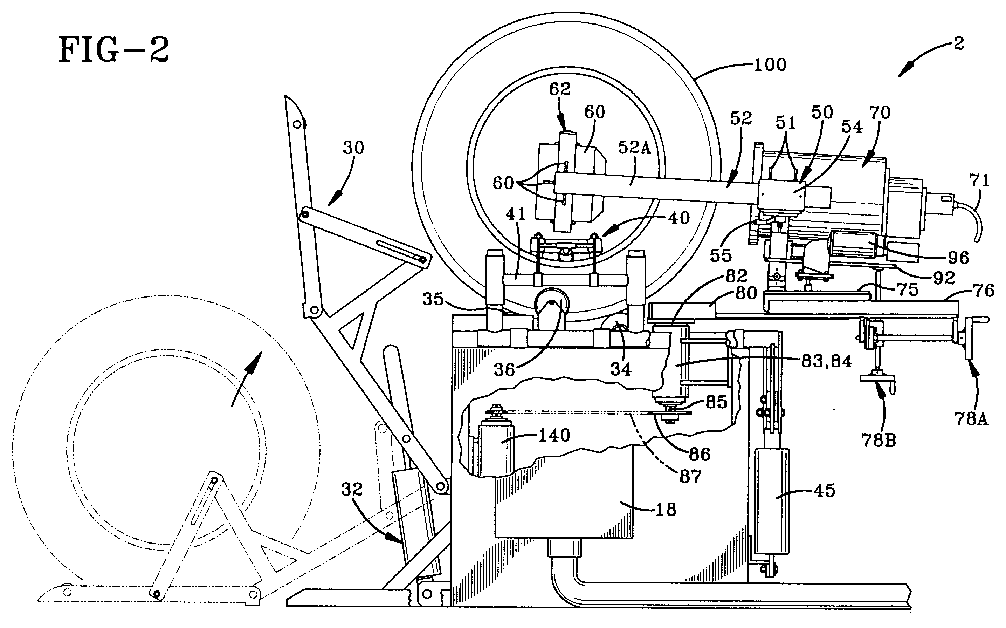

The apparatus 2 includes a frame 20. Attached to the frame 20 is a mechanical tire lift mechanism 30. The tire lift mechanism, as illustrated in Fig. 2, lays on the floor. Prior to loading a casing 100 onto the apparatus, all mechanisms are rotated clear of tire loading path. An operator can thus roll a tire casing onto the lift mechanism. This is as displayed by the phantom or dashed lines of Fig. 2. Upon actuating a lever on the side of the apparatus 2 a pneumatic cylinder 32 is extended raising the lift mechanism 30 such that the casing 100 can be rolled onto the apparatus 2 without requiring the operator to lift the casing 100.

The operator rests the tire on two spaced rollers 34,35, and between a pair of roller guides 36,37. Having placed the vertically standing casing 100 onto the apparatus 2, the operator next rotates the bead spreader mechanism 40 into the casing 100.

As previously noted, the bead spreader mechanism 40, upon loading a casing 100, is rotated pivotally outwardly about the cylindrical rods 41 away from the path of the tire casing. This permits the casing to be rolled directly onto the apparatus. Once the casing is positioned onto the rollers 35,36 the operator manually pivots the bead spreader mechanism 40 into the casing 100. This mechanism includes two spreader arms 42,44. Each arm has a pair of rollers 43, the rollers 43 contact the interior of the casing 100 near the beads 122 of the tire.

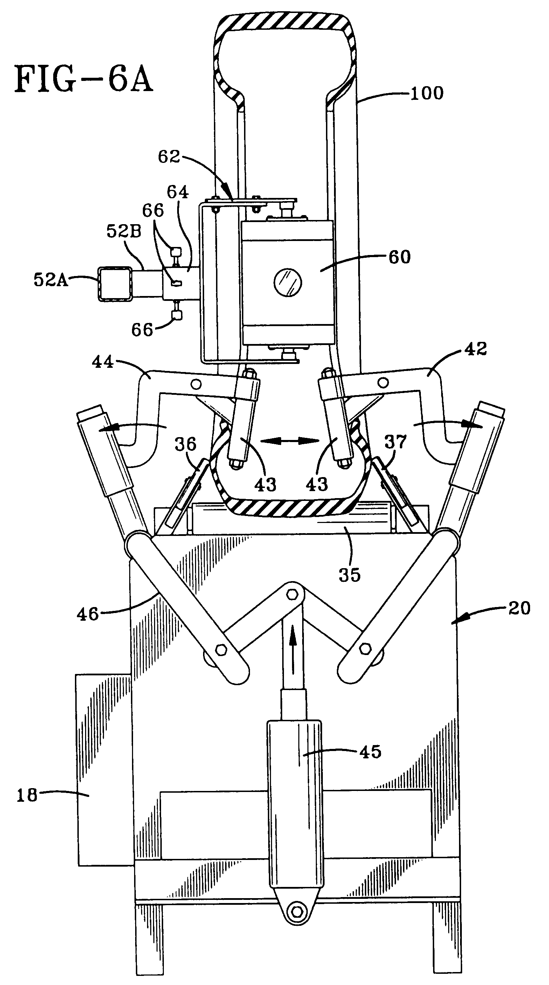

As shown in Fig. 6, the spreader mechanism 40 is in a non-spread or relaxed state. Prior to initiating inspection of the casing 100, the operator actuates the spread mechanism's pneumatic cylinder 45. As the cylinder 45 extends a linkage assembly 46 is pivotally moved forcing the cylindrical rods 41 to move away from the casing 100, this in turn enables the spreader arms 42,44 to pull the casing beads 122 apart as shown in Fig. 6A.

As further illustrated in Fig. 1, the apparatus 2 has a traversable carriage assembly 50. The assembly 50 has a source 60 pivotally attached to a slidable support arm 52, the slidable support arm 52 being clamped to the assembly 50 by a pair of threaded fasteners 51. The threaded fasteners are threadedly engaged to a bracket 54. The support arm being a square tubular member which is slid into the large square tube bracket 54 and clamped into place by the fasteners 51.

The carriage assembly 50 also includes a detector 70. The detector 70 is pivotally attached to the assembly 50 at the bracket pivot point 72 and is further supported by the spring loaded pin 74. These two support points in conjunction with the elevator hand crank 78B at the detector end of the assembly allow the source, and detector, to be angularly upwardly or downwardly moved as shown in Fig. 3A.

The carriage assembly is attached to a slide bar 75 which is slidably attached to a guide 76. The slide bar 75 is rigidly connected to a bracket 77 which in turn is connected to the threaded hand crank 78A. The crank 78A is threadedly engaged to bracket 79. The hand crank 78A in the preferred embodiment provides 8.5 inches (22 cm) of linear travel of the assembly carriage 50. The entire assembly 50 is mounted and supported by a main rotating arm structure 80. The supporting arm structure 80 includes a pivoting shaft 82. The shaft 82 is inserted through a sleeve bearing 83 which is held in place by a bearing housing pivot bracket 84. The bearing shaft includes a keyed axle 85 with a roller chain sprocket 86. Attached to the sprocket 86 is a roller chain 87 which is driven by a conventional electric motor 140 internal of the frame, the motor 140 providing a means for pivotally rotating the carriage assembly 50. The motor 140 being connected to the control panel 14 enables the operator to remotely pivot the carriage assembly 50 during the inspection procedure.

The support arm 52 of the carriage assembly 50 includes a long square tubular portion 52A and a shorter square tubular portion 52B at 90° to the longer portion 52A. The portion 52B provides a means for attaching the source 60 to the support arm 52. The source 60 is pivotally attached to a bracket 62, the bracket 62 being welded to a square tubular member 64, the member 64 fitting over and slidably attached to the short arm 52B. The member 64 being threaded is clamped to the short arm 52B by means of threaded fasteners 66. The source 60 being pivotally attached to the bracket 62 permits the source to be angularly inclined relative to the detector as shown in Fig. 4C.

As further illustrated in Fig. 4C, the apparatus includes a threaded shaft 90. The support arm 52 has an arm 52C pivotally connected to the bracket 92 by a threaded fastener 93. A rigid member 52D is attached to the arm 52C near the pivot location. The rigid member 52D has a slotted member 94 adapted to receive the cylindrical member 95, the cylindrical member 95 being threadedly engaged to the threaded shaft 90. Upon rotation of the threaded shaft 90, a relative angular motion can be achieved between the pivoting source 60 and the detector 70. The threaded shaft is connected to the small gear drive motor 96. The drive motor is a 90 V DC 89.0 full load RPM, 34 in-lb full load torque, 37:1 ratio, 1/10 input HP 0.89 full load amps, Dayton permanent magnet gearmotor model number 42728 as illustrated. The motor is electrically connected to the remote control panel 14 and, therefore, such relative motion between the source 60 and the detector 70 can be achieved at the control panel 14.

As illustrated in Fig. 4C, the angular displacement of the source 10 and the detector 70 can be increased by biasing the support arm 52A relative to the arm 52C. This additional biasing is accomplished by loosening the clamp handle 55 and rotating the source 60 and arm 52A relative to arm 52C. Upon achieving the desired increase angular orientation the clamp 55 is retightened. As is readily apparent from Fig. 4C, a portion of the detector and its associated bracketry were shown cut away to facilitate viewing the shaft 90 and related components.

The above-described apparatus has been developed to provide a wide range of relative movement between the detector 60 and the source 70. This range of movement not only facilitates the inspection procedures, but also permits detection of specific areas of the tire that were not feasible with the apparatus of the prior art.

Additionally, in the preferred embodiment of the invention, the operator can increase the magnification of the image shown on the video monitor 11. The screen is typically set at about an 8 or 9 inch field of vision which can be increased by switching to a 6 inch or alternatively a 4 inch view. The magnified views permit the operator to get a closer look at any potential defect.

## Claims

1. The method of inspecting a tire casing with a breaker reinforcement, the method comprising the steps of:
a) external of the casing, aligning a source and a detector, the source angularly transmitting a beam across the shoulder region of the tire and angularly impinging a portion of the detector with the beam;
b) rotating the casing about its axis of rotation;
c) receiving the beam image of the shoulder region of the casing; and
d) observing any separation or lifting of the breaker edge of the casing relative to the rest of the breaker as displayed onto a screen.

2. The method for inspecting a pneumatic tire casing of claim 1 comprising the steps of:
a) positioning the line between a source and a detector at an angle ϑ greater than 45°, ϑ being the angle formed between the line and the mid-circumferential plane of the tire casing.

3. The method of claim 2 further comprising the step of:
shielding the detector from that portion of the emitted beam that does not pass through the casing.

4. An apparatus for inspecting a pneumatic tire casing, the apparatus characterized by:
a traversable carriage assembly, the assembly being pivotally and linearly movable;
a source of penetrating radiation attached to the traversable carriage assembly, the source being capable of emitting a beam;
an image detector linearly spaced along the beam path or axis of the source, the detector being attached to the traversable carriage assembly;
a means for energizing the source;
a means for aligning the source and detector external of the casing, the source angularly transmitting a beam across the shoulder region of the tire and angularly impinging a portion of the detector, the positioned beam intersecting a lateral edge of at least one breaker or belt in the casing.

5. The apparatus of claim 4 wherein the source and the detector are positioned external of the casing when positioning the beam to intersect a lateral edge of a breaker at an angle ϑ of greater than 45° relative to the mid-circumferential plane of the casing.

6. The apparatus of claim 4 further characterized by:
a means for axially spreading the bead portion of a tire casing.

7. The apparatus of claim 4 further characterized by:
a means for rotating the tire about its axis of rotation.

8. The apparatus of claim 4 wherein the source is an X-ray tube.

9. The apparatus of claim 4 wherein the detector is a fluoroscope.

10. The apparatus of claim 4 further characterized by:
a means for lifting the casing.
